# EUROPEAN PATENT APPLICATION

(11) **EP 4 376 512 A1**
(43) Date of publication of application: **29.05.2024**
(21) Application number: 22845335.3
(22) Date of filing: 20.07.2022
(51) Int. Cl.: H04W 68/00

(54) **PAGING METHOD AND APPARATUS, DEVICE, AND COMPUTER STORAGE MEDIUM**

(30) Priority: 20.07.2021 CN 202110821428; 04.01.2022 CN 202210003218
(71) Applicant: Vivo Mobile Communication Co., Ltd., Dongguan, Guangdong 523863 (CN)
(72) Inventor: BAO, Wei, Dongguan, Guangdong 523863 (CN)
(74) Representative: Lavoix
(86) International application number: PCT/CN2022/106679
(87) International publication number: WO 2023/001170

(57) **Abstract**

This application discloses a paging method and apparatus, a device, and a computer storage medium. The method includes: sending, by a terminal, one or more of the following to a core network device and/or a serving cell: first information, where the first information indicates a radio access capability of the terminal; and second information, where the second information indicates a terminal type of the terminal.

## Description

### CROSS-REFERENCE TO RELATED APPLICATIONS

This application claims priority to Chinese Patent Application No. 202110821428.2, filed in China on July 20, 2021, and Chinese Patent Application No. 202210003218.7, filed in China on January 4, 2022, both of which are incorporated herein by reference in their entireties.

### TECHNICAL FIELD

This application pertains to the field of communications technologies, and specifically relates to a paging method and apparatus, a device, and a computer storage medium.

### BACKGROUND

In a future mobile communications network, there are terminals having a plurality of types of capabilities, for example, reduced capability (Reduced Capability, RedCap) terminals and non-RedCap terminals. Usually, a RedCap terminal is a low-complexity and low-cost terminal whose capability is lower than that of a non-RedCap terminal. RedCap terminals may be further classified into two types: a RedCap terminal having one receive antenna (1rx) and a RedCap terminal having two receive antennas (2rx).

Only some cells in the mobile communications network can serve RedCap terminals. These cells use broadcast messages to indicate whether to allow 1rx RedCap terminals, 2rx RedCap terminals, or 1rx RedCap terminals, and 2rx RedCap terminals to camp. If a cell (for example, cell A (Cell A)) does not support a 1rx RedCap terminal in camping, the 1rx RedCap terminal (for example, terminal A) does not monitor paging in the cell.

However, in the related art, a paging message for terminal A is still sent in cell A (assuming that in a same tracking area (Tracking Area, TA), some cells support 1rx RedCap terminals and some do not), unnecessary radio resource waste is caused. In addition, other terminals in the cell are accidentally woken up by a paging (Paging) physical downlink control channel (Physical Downlink Control Channel, PDCCH) and receive the paging PDCCH, resulting in unnecessary power consumption.

### SUMMARY

Embodiments of this application provide a paging method and apparatus, a device, and a computer storage medium, to resolve a problem of unnecessary radio resource waste generated when a network side sends a paging message and how to avoid unnecessary power consumption caused by accidental wake-up of a terminal.

According to a first aspect, a paging method is provided and includes:
sending, by a terminal, one or more of the following to a core network device and/or a serving cell (or described as a serving base station, that is, a base station to which the serving cell belongs):
first information, where the first information indicates a radio access capability of the terminal (or described as a radio access layer capability); and
second information, where the second information indicates a terminal type of the terminal.

According to a second aspect, a paging method is provided and includes:
sending, by a first radio access network device, third information to a core network device and/or a second radio access network device, where the third information indicates a terminal type of a terminal that the first radio access network device forbids or allows to camp.

According to a third aspect, a paging method is provided and includes:
receiving, by a second radio access network device, one or more of the following from a terminal: first information, where the first information indicates a radio access capability of the terminal, and second information, where the second information indicates a terminal type of the terminal;
   or
receiving, by a second radio access network device, third information from a first radio access network device, where the third information indicates a terminal type of a terminal that the first radio access network device forbids or allows to camp.

According to a fourth aspect, a paging method is provided and includes:
receiving, by a core network device, one or more of the following: first information, where the first information indicates a radio access capability of a terminal; and second information, where the second information indicates a terminal type of the terminal; and/or
receiving, by the core network device, third information from a first radio access network device, where the third information indicates a terminal type of a terminal that the first radio access network device forbids or allows to camp.

According to a fifth aspect, a paging apparatus is provided and applied to a terminal and includes:
a first sending module, configured to send one or more of the following to a core network device and/or a serving cell and/or a base station:
first information, where the first information indicates a radio access capability of the terminal; and
second information, where the second information indicates a terminal type of the terminal.

According to a sixth aspect, a paging apparatus is provided and applied to a first radio access network device and includes:
a second sending module, configured to send, by the first radio access network device, third information to a core network device, where the third information indicates a terminal type of a terminal that the first radio access network device forbids or allows to camp.

According to a seventh aspect, a paging apparatus is provided and applied to a second radio access network device and includes:
a fourth receiving module, configured to receive one or more of the following from a terminal: first information, where the first information indicates a radio access capability of the terminal, and second information, where the second information indicates a terminal type of the terminal; or receive third information from a first radio access network device, where the third information indicates a terminal type of a terminal that the first radio access network device forbids or allows to camp.

According to an eighth aspect, a paging apparatus is provided and applied to a core network device and includes:
a fifth receiving module, configured to receive one or more of the following from a terminal: first information, where the first information indicates a radio access capability of the terminal; and second information, where the second information indicates a terminal type of the terminal; and/or receive third information from a first radio access network device, where the third information indicates a terminal type of a terminal that the first radio access network device forbids or allows to camp.

According to a ninth aspect, a paging method is provided and includes: receiving, by a first radio access network device, a first paging message from a core network device and/or a second radio access network device, where the first paging message includes first information and an identity of a paged terminal, where the first information indicates a terminal type of the paged terminal or a radio access capability of the paged terminal; or the first paging message includes an identity of a paged terminal and information about a second cell, or an identity of a paged terminal and information about a third cell, where the second cell is a cell that needs to send a paging message including the identity of the paged terminal, and the third cell is a cell that does not need to send a paging message including the identity of the paged terminal.

According to a tenth aspect, a paging method is provided and includes: sending, by a network-side device, a first paging message to a first radio access network device, where the first paging message includes an identity of a paged terminal, and the first radio access network device satisfies at least one of the following: at least one cell of the first radio access network device allows a terminal belonging to a terminal type of the paged terminal to camp, the first radio access network device supports a RedCap terminal, and the first radio access network device supports the terminal belonging to the terminal type of the paged terminal;
or
sending, by a network-side device, a first paging message to a first radio access network device, where the first paging message includes first information and an identity of a paged terminal, and the first information indicates a terminal type of the paged terminal or a radio access capability of the paged terminal.

According to an eleventh aspect, a paging apparatus is provided and applied to a first radio access network device and includes: a first receiving module, configured to receive a first paging message from a core network device and/or a second radio access network device, where the first paging message includes first information and an identity of a paged terminal, where the first information indicates a terminal type of the paged terminal or a radio access capability of the paged terminal; or the first paging message includes an identity of a paged terminal and information about a second cell, or an identity of a paged terminal and information about a third cell, where the second cell is a cell that needs to send a paging message including the identity of the paged terminal, and the third cell is a cell that does not need to send a paging message including the identity of the paged terminal.

According to a twelfth aspect, a paging apparatus is provided and applied to a network-side device, where the apparatus includes: a first sending module, where the first sending module is configured to send a first paging message to a first radio access network device, where the first paging message includes an identity of a paged terminal, and the first radio access network device satisfies at least one of the following: at least one cell of the first radio access network device allows a terminal belonging to a terminal type of the paged terminal to camp, the first radio access network device supports a RedCap terminal, and the first radio access network device supports the terminal belonging to the terminal type of the paged terminal;
or
a first sending module, configured to send a first paging message to a first radio access network device, where the first paging message includes first information and an identity of a paged terminal, and the first information indicates a terminal type of the paged terminal or a radio access capability of the paged terminal.

According to a thirteenth aspect, a terminal is provided and includes a processor, a memory, and a program stored in the memory and capable of running on the processor. When the program is executed by the processor, the steps of the method according to the first aspect are implemented.

According to a fourteenth aspect, a network-side device is provided and includes a processor, a memory, and a program stored in the memory and capable of running on the processor. When the program is executed by the processor, the steps of the method according to the second aspect, the third aspect, the fourth aspect, the ninth aspect, or the tenth aspect are implemented.

According to a fifteenth aspect, a readable storage medium is provided. The readable storage medium stores a program or instructions. When the program or instructions are executed by a processor, the steps of the method according to the first aspect, the second aspect, the third aspect, the fourth aspect, the ninth aspect, or the tenth aspect are implemented.

According to a sixteenth aspect, a computer program or program product is provided. The computer program or program product is stored in a non-volatile storage medium. The computer program or program product is executed by at least one processor to implement the steps of the processing method according to the first aspect, the second aspect, the third aspect, the fourth aspect, the ninth aspect, or the tenth aspect.

According to a seventeenth aspect, a chip is provided. The chip includes a processor and a communication interface. The communication interface is coupled to the processor. The processor is configured to run a program or instructions to implement the processing method according to the first aspect, the second aspect, the third aspect, the fourth aspect, the ninth aspect, or the tenth aspect.

In the embodiments of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

### BRIEF DESCRIPTION OF DRAWINGS

FIG. 1 is a first paging flowchart in the related art;
FIG. 2 is a second paging flowchart in the related art;
FIG. 3 is a schematic diagram of a wireless communications system to which an embodiment of this application can be applied;
FIG. 4 is a first flowchart of a paging method according to an embodiment of this application;
FIG. 5 is a second flowchart of a paging method according to an embodiment of this application;
FIG. 6 is a third flowchart of a paging method according to an embodiment of this application;
FIG. 7 is a fourth flowchart of a paging method according to an embodiment of this application;
FIG. 8 is a fifth flowchart of a paging method according to an embodiment of this application;
FIG. 9 is a sixth flowchart of a paging method according to an embodiment of this application;
FIG. 10 is a seventh flowchart of a paging method according to an embodiment of this application;
FIG. 11 is an eighth flowchart of a paging method according to an embodiment of this application;
FIG. 12 is a ninth flowchart of a paging method according to an embodiment of this application;
FIG. 13 is a tenth flowchart of a paging method according to an embodiment of this application;
FIG. 14 is a first schematic diagram of a paging apparatus according to an embodiment of this application;
FIG. 15 is a second schematic diagram of a paging apparatus according to an embodiment of this application;
FIG. 16 is a third schematic diagram of a paging apparatus according to an embodiment of this application;
FIG. 17 is a fourth schematic diagram of a paging apparatus according to an embodiment of this application;
FIG. 18 is a fifth schematic diagram of a paging apparatus according to an embodiment of this application;
FIG. 19 is a sixth schematic diagram of a paging apparatus according to an embodiment of this application;
FIG. 20 is a schematic diagram of a terminal according to an embodiment of this application; and
FIG. 21 is a schematic diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and" in the specification and claims indicates at least one of connected objects, and the character "/" generally represents an "or" relationship between associated objects.

It should be noted that technologies described in the embodiments of this application are not limited to a new radio (New Radio, NR) system or a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the NR system is described for an illustrative purpose, and NR terms are used in most of the following descriptions. These technologies may also be applied to other applications than an NR system application, for example, a 6th Generation (6th Generation, 6G) communications system.

First, the following technical points are described to facilitate understanding of the embodiments of this application.

### 1. Cell bar (Cell Bar) mechanism

A cell may indicate, by using a specific information field in system information, that a type of terminal is forbidden to camp. For example, a cell may indicate at least one of the following:
(1) forbidding a 1rx RedCap terminal (such as user equipment (User Equipment, UE)) to camp;
(2) forbidding 2rx RedCap UE to camp;
(3) forbidding non-RedCap UE to camp; and
(4) forbidding all UEs to camp.

### 2. Paging (Paging) mechanism

A network finds called UE through paging. When UE is radio resource control (Radio Resource Control, RRC) idle (idle) or inactive (inactive), the UE reports a current location area (a location area includes one or more cells) to the network (Network, NW). After the UE moves out of the current location area, the UE initiates a location registration or update process to the NW and receives a new location area configured by the NW. Therefore, the NW knows only the current location area of the RRC idle or inactive UE.

When a service needs to page the RRC idle or inactive UE, a core network device or an anchor base station sends paging to one or more cells in the current location area of the UE.

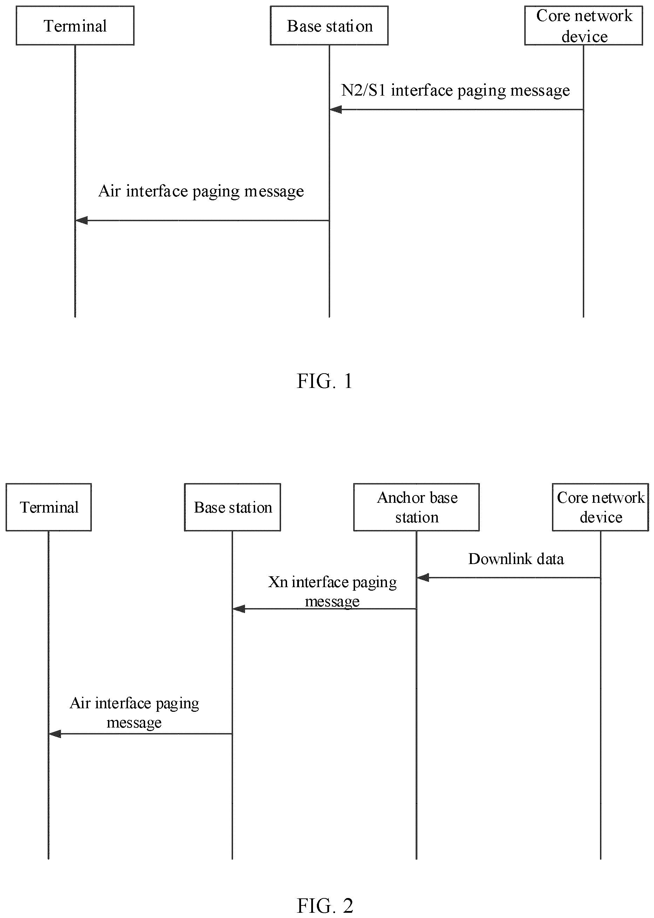

Paging on an air interface may be triggered by the core network device (refer to FIG. 1) or an access network device (refer to FIG. 2).

In a location area, there are a plurality of cells. Some cells may support 1rx RedCap UE in camping, and some cells may not support 1rx RedCap UE. Therefore, when the NW needs to page 1rx RedCap UE (such as UE A), an N2 interface paging message or an Xn interface paging message may be sent to a cell (such as cell A) that does not support the 1rx RedCap UE in camping. As a result, cell A sends paging for UE A. Because UE A definitely does not receive paging in cell A (Cell A), it is unnecessary to send paging for UE A in cell A.

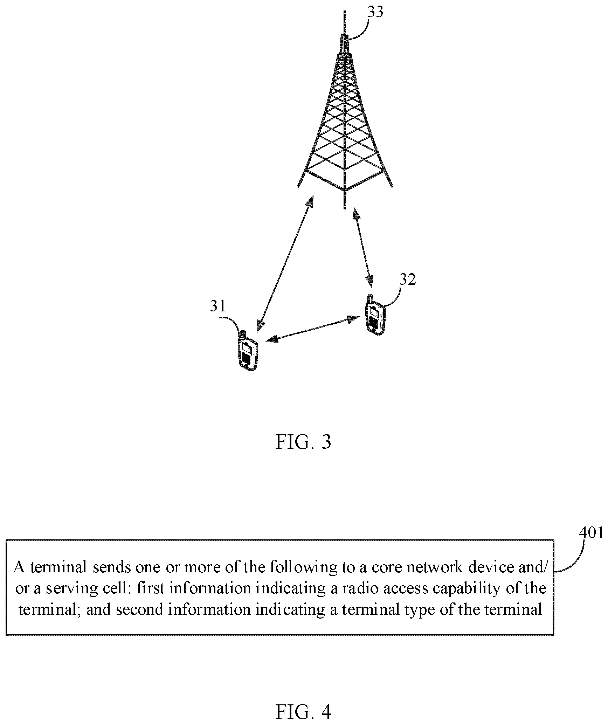

FIG. 3 is a block diagram of a wireless communications system to which an embodiment of this application can be applied. The wireless communications system includes a terminal 31, a terminal 32, and a network-side device 33. The terminal may also be referred to as a terminal device or UE. The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device), a vehicle user equipment (Vehicle User Equipment, VUE), or a pedestrian user equipment (Pedestrian User Equipment, PUE). The wearable device includes a smartwatch, a smart band, an earphone, glasses, or the like. It should be noted that specific types of the terminal 31 and the terminal 32 are not limited in the embodiments of this application.

The network-side device 33 may be a base station or a core network device. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (gNB), a home NodeB, a home evolved NodeB, a wireless local area network (Wireless Local Area Network, WLAN) access point, a Wireless Fidelity (Wireless Fidelity, Wi-Fi) node, a transmission and reception point (Transmitting Receiving Point, TRP), a radio access network node, or another appropriate term in the art. As long as the same technical effect is achieved, the base station is not limited to specific technical terms. It should be noted that in the embodiments of this application, only a base station in an NR system is used as an example, but a specific type of the base station is not limited.

Referring to FIG. 4, an embodiment of this application provides a paging method. A specific procedure includes step 401.

Step 401: A terminal sends one or more of the following to a core network device and/or a serving cell:
(1) first information, where the first information indicates a radio access capability of the terminal; and
(2) second information, where the second information indicates a terminal type of the terminal.

The first information and/or the second information are/is used by the core network device and/or the serving cell and/or a base station to determine whether to send a paging message for a paged terminal through a cell on which the paged terminal camps.

It may be understood that whether a receive antenna of a terminal is 1rx or 2rx belongs to a radio access capability of the terminal; and a core network encryption algorithm or the like supported by the terminal belongs to a core network capability. Usually, the core network device does not interpret the radio access capability of the terminal. In this embodiment of this application, the core network device needs to know the type and/or radio access capability of the terminal, to send a paging message.

In an implementation of this application, the method further includes: the terminal receives a paging message through a first cell, where the first cell allows the terminal of the terminal type or having the radio access capability to camp.

In an implementation of this application, the radio access capability or the terminal type includes one or more of the following:
(1) a RedCap terminal;
(2) a RedCap terminal having one receive antenna;
(3) a RedCap terminal having two receive antennas; and
(4) other terminals, where the other terminals are terminals that a radio access network device can forbid to camp by using a broadcast message, other than the RedCap terminal having one or two receive antennas.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

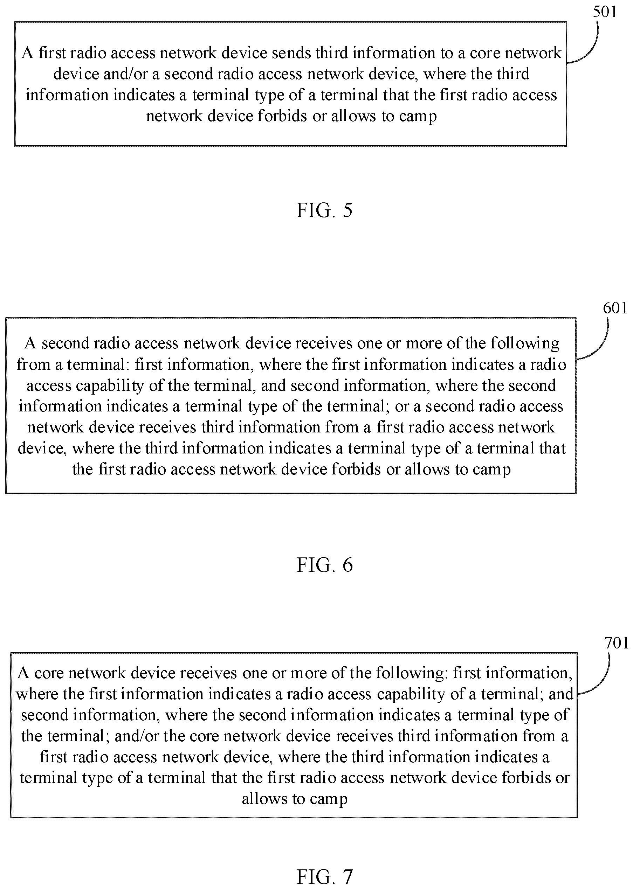

Referring to FIG. 5, an embodiment of this application provides a paging method. A specific procedure includes step 501.

Step 501: A first radio access network device sends third information to a core network device and/or a second radio access network device (such as an anchor base station), where the third information indicates a terminal type of a terminal that the first radio access network device forbids or allows to camp.

The third information is used by the core network device and/or the second radio access network device to determine whether to send a paging message for a paged terminal through the first radio access network device.

In an implementation of this application, the method further includes:
the first radio access network device receives a first paging message from the core network device and/or the second radio access network device, where the first paging message includes one or more of the following:
(1) an identity of the paged terminal;
(2) information about a second cell, where the second cell is a cell that needs to send a paging message including the identity of the paged terminal, for example, the information about the second cell may be an identity of the second cell; and
(3) information about a third cell, where the third cell is a cell that does not need to send a paging message including the identity of the paged terminal, for example, the information about the third cell may be an identity of the third cell.

It may be understood that if the first radio access network device receives the first paging message from the core network device, the first paging message may be described as a next generation interface paging (NG paging) message, or an N2 interface paging message, or an S 1 interface paging message; or if the first radio access network device receives the first paging message from the second radio access network device, the first paging message may be described as an Xn interface paging message or an X2 interface paging message.

In an implementation of this application, the method further includes:
the first radio access network device sends a second paging message, for example, an air interface paging message, to the paged terminal through the second cell; or
the first radio access network device sends a second paging message to the paged terminal through a cell under the first radio access network device other than the third cell.

In an implementation of this application, the method further includes:
the first radio access network device receives a third paging message from the core network device and/or the second radio access network device, where the third paging message includes fourth information and the identity of the paged terminal, and the fourth information indicates a terminal type of the paged terminal.

In an implementation of this application, the method further includes:
the first radio access network device sends a paging message through a cell that is under the first radio access network device and that allows the terminal type of the paged terminal indicated by the fourth information to camp.

It may be understood that if the first radio access network device receives the third paging message from the core network device, the first paging message may be described as a next generation interface paging message, or an N2 interface paging message, or an S1 interface paging message; or if the first radio access network device receives the third paging message from the second radio access network device, the third paging message may be described as an Xn interface paging message or an X2 interface paging message.

In an implementation of this application, the terminal type of the terminal that the first radio access network device forbids or allows to camp includes: a terminal type of a terminal that all cells of the first radio access network device forbid or allow to camp; or a terminal type of a terminal that each cell of the first radio access network device forbids or allows to camp.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

Referring to FIG. 6, an embodiment of this application provides a paging method. A specific procedure includes step 601.

Step 601: A second radio access network device (such as an anchor base station) receives one or more of the following from a terminal: first information, where the first information indicates a radio access capability of the terminal, and second information, where the second information indicates a terminal type of the terminal; or a second radio access network device receives third information from a first radio access network device, where the third information indicates a terminal type of a terminal that the first radio access network device forbids or allows to camp.

In an implementation of this application, the method further includes:
the second radio access network device sends a fourth paging message (which may be described as an Xn interface paging message or an X2 interface paging message) to the first radio access network device, where at least one cell of the first radio access network device allows a terminal belonging to a terminal type of a paged terminal to camp; or
the second radio access network device sends a fifth paging message (which may be described as an Xn interface paging message or an X2 interface paging message), that is, the second radio access network device may send the fifth paging message to the first radio access network device, and the first radio access network device itself determines cells that are under the first radio access network device and in which a paging message (that is, an air interface paging message) for a paged terminal needs to be sent; and the first radio access network device sends the air interface paging message only in a cell that is under the first radio access network device and that supports the paged terminal in camping.

In an implementation of this application, the fourth paging message includes one or more of the following:
(1) an identity of the paged terminal;
(2) information about a second cell, where the second cell is a cell that needs to send a paging message including the identity of the paged terminal, for example, an identity of the second cell; and
(3) information about a third cell, where the third cell is a cell that does not need to send a paging message including the identity of the paged terminal, for example, an identity of the third cell.

In an implementation of this application, the fifth paging message includes one or more of the following:
(1) an identity of the paged terminal; and
(2) fifth information, where the fifth information indicates a terminal type of the paged terminal.

In an implementation of this application, the terminal type of the terminal that the first radio access network device forbids or allows to camp includes: a terminal type of a terminal that all cells of the first radio access network device forbid or allow to camp; or a terminal type of a terminal that each cell of the first radio access network device forbids or allows to camp.

In an implementation of this application, the radio access capability or the terminal type includes one or more of the following:
(1) a RedCap terminal having one receive antenna;
(2) a RedCap terminal having two receive antennas; and
(3) other terminals, where the other terminals are terminals that a radio access network device can forbid to camp by using a broadcast message, other than the RedCap terminal having one or two receive antennas.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

Referring to FIG. 7, an embodiment of this application provides a paging method. A specific procedure includes step 701.

Step 701: A core network device receives one or more of the following: first information, where the first information indicates a radio access capability of a terminal; and second information, where the second information indicates a terminal type of the terminal; and/or the core network device receives third information from a first radio access network device, where the third information indicates a terminal type of a terminal that the first radio access network device forbids or allows to camp.

The first information and/or the second information are/is used by the core network device and/or a serving cell and/or a base station to determine whether to send a paging message for a paged terminal through a cell on which the paged terminal camps.

The third information is used by the core network device and/or a second radio access network device to determine whether to send a paging message for the paged terminal through the first radio access network device.

In an implementation of this application, the method further includes:
the core network device determines a terminal type of the paged terminal based on the first information and/or the second information; and
the core network device determines a third radio access network device, where the third radio access network device has at least one cell that allows the paged terminal to camp; and the core network device sends a sixth paging message (or described as a next generation interface paging message or an N2 interface paging message or an S 1 interface paging message) to the third radio access network device;
   or
the core network device may send a seventh paging message (or described as an Xn interface paging message or an X2 interface paging message) to the first radio access network device, and the first radio access network device itself determines cells that are under the first radio access network device and in which a paging message (that is, an air interface paging message) for the paged terminal needs to be sent; and the first radio access network device sends the air interface paging message only in a cell that is under the first radio access network device and that supports the paged terminal in camping.

In an implementation of this application, the sixth paging message includes one or more of the following:
(1) an identity of the paged terminal;
(2) information about a second cell, where the second cell is a cell that needs to send a paging message including the identity of the paged terminal; and
(3) information about a third cell, where the third cell is a cell that does not need to send a paging message including the identity of the paged terminal.

In an implementation of this application, the seventh paging message includes one or more of the following:
(1) an identity of the paged terminal; and
(2) sixth information, where the sixth information indicates the terminal type of the paged terminal.

In an implementation of this application, the terminal type includes one or more of the following:
(1) a RedCap terminal having one receive antenna;
(2) a RedCap terminal having two receive antennas; and
(3) other terminals, where the other terminals are terminals that a radio access network device can forbid to camp by using a broadcast message, other than the RedCap terminal having one or two receive antennas.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

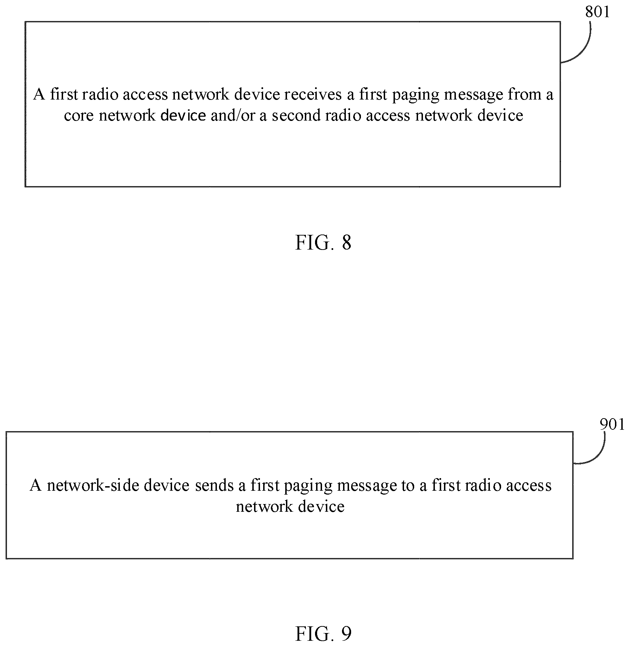

Referring to FIG. 8, an embodiment of this application provides a paging method. A specific procedure includes step 801.

Step 801: A first radio access network device receives a first paging message from a core network device and/or a second radio access network device.

In an implementation, the first paging message includes first information and an identity of a paged terminal, and the first information indicates a terminal type of the paged terminal or a radio access capability of the paged terminal. Optionally, after receiving the first paging message, the first radio access network device sends a paging message through a cell that is under the first radio access network device and that allows the terminal type of the paged terminal to camp.

In another implementation, the first paging message includes an identity of a paged terminal and information about a second cell, or an identity of a paged terminal and information about a third cell, where the second cell is a cell that needs to send a paging message including the identity of the paged terminal, and the third cell is a cell that does not need to send a paging message including the identity of the paged terminal. Optionally, the method further includes: the first radio access network device sends a second paging message to the paged terminal through the second cell; or the first radio access network device sends a second paging message to the paged terminal through a cell under the first radio access network device other than the third cell.

In an optional implementation, the method further includes: the first radio access network device sends second information to the core network device and/or the second radio access network device, where the second information is used to indicate at least one of the following:
a terminal type of a terminal that the first radio access network device forbids or allows to camp;
a terminal type supported by the first radio access network device; and
the first radio access network device being a network device supporting a first terminal type.

It should be noted that before receiving the first paging message, the first radio access network device sends the second information to the core network device and/or the second radio access network device. In addition, the terminal type supported by the first radio access network device may be understood as a terminal type for which the first radio access network device can provide a service. For example, the first radio access network device may provide a service for a 1rx RedCap terminal, and in this case, it may be considered that the first radio access network device supports the 1rx RedCap terminal.

In an optional implementation, the terminal type of the terminal that the first radio access network device forbids or allows to camp includes:
a terminal type of a terminal that all cells of the first radio access network device forbid or allow to camp;
   or
a terminal type of a terminal that each cell of the first radio access network device forbids or allows to camp.

In an optional implementation, the radio access capability, the terminal type, or the first terminal type includes at least one of the following:
a reduced capability RedCap terminal;
a RedCap terminal having one receive antenna;
a RedCap terminal having two receive antennas; and
other terminals, where the other terminals are terminals that a radio access network device can forbid to camp by using a broadcast message, other than the RedCap terminal having one or two receive antennas.

In an optional implementation, the terminal type of the paged terminal is the same as or different from the terminal type of the terminal that the first radio access network device forbids or allows to camp, the terminal type supported by the first radio access network device, or the first terminal type. For example, the first radio access network device indicates, to the core network device or the second radio access network device, that the terminal type supported by the first radio access network device is a RedCap terminal, but the terminal type of the paged terminal that is indicated by the core network device or the second radio access network device to the first radio access network device is a 1rx RedCap terminal.

In an optional implementation, the method further includes:
the first radio access network device receives one or more of the following from a terminal:
third information, where the third information indicates a radio access capability of the terminal; and
fourth information, where the fourth information indicates a terminal type of the terminal; and
the first radio access device sends one or more of the following to the core network device and/or the second radio access network device:
   the third information, where the third information indicates the radio access capability of the terminal; and
   the fourth information, where the fourth information indicates the terminal type of the terminal.

It should be noted that the third information or the fourth information received by the first radio access network device from the terminal may be transparently transmitted to the core network device or the second radio access network device; and the third information or the fourth information received by the first radio access network device from the terminal may also be forwarded by the first radio access network device to the core network device or the second radio access network device, where the forwarding may be non-transparent transmission.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

Referring to FIG. 9, an embodiment of this application provides a paging method. A specific procedure includes step 901.

Step 901: A network-side device sends a first paging message to a first radio access network device.

In an implementation, the first paging message includes an identity of a paged terminal, at least one cell of the first radio access network device allows a terminal belonging to a terminal type of the paged terminal to camp, and the first radio access network device supports a RedCap terminal, or the first radio access network device supports the terminal belonging to the terminal type of the paged terminal. Optionally, the first paging message further includes at least one of the following: information about a second cell, where the second cell is a cell that needs to send a paging message including the identity of the paged terminal; and information about a third cell, where the third cell is a cell that does not need to send a paging message including the identity of the paged terminal.

In another implementation, the network-side device sends a first paging message to the first radio access network device, where the first paging message includes first information and an identity of a paged terminal, and the first information indicates a terminal type of the paged terminal or a radio access capability of the paged terminal.

In an optional implementation, the method further includes:
the network-side device receives second information from the first radio access network device; or
the network-side device obtains second information through an operation, administration and maintenance (Operation Administration Maintenance, OAM) configuration, where
the second information is used to indicate at least one of the following:
   a terminal type of a terminal that the first radio access network device forbids or allows to camp;
   a terminal type supported by the first radio access network device; and
   the first radio access network device being a network device supporting a first terminal type.

In an optional implementation, the terminal type of the terminal that the first radio access network device forbids or allows to camp includes:
a terminal type of a terminal that all cells of the first radio access network device forbid or allow to camp;
   or
a terminal type of a terminal that each cell of the first radio access network device forbids or allows to camp.

In an optional implementation, the method further includes: the network-side device obtains one or more of third information and fourth information from a terminal, where the third information indicates a radio access capability of the terminal, and the fourth information indicates a terminal type of the terminal; or the network-side device receives one or more of the following from a third access network device: third information, where the third information indicates a radio access capability of a terminal; and fourth information, where the fourth information indicates a terminal type of the terminal.

In an optional implementation, the radio access capability, the terminal type, or the first terminal type includes one or more of the following:
a RedCap terminal having one receive antenna;
a RedCap terminal having two receive antennas; and
other terminals, where the other terminals are terminals that a radio access network device can forbid to camp by using a broadcast message, other than the RedCap terminal having one or two receive antennas.

In an optional implementation, the network-side device includes a second access network device or a core network device.

In an optional implementation, in a case that the network-side device is the core network device, the method further includes:
the core network device determines the terminal type of the paged terminal based on the third information and/or the fourth information.

In this embodiment of this application, radio resource (for carrying a paging message) waste caused by sending of paging for a paged terminal in a cell that does not allow the paged terminal to camp is avoided, and unnecessary power consumption caused by wake-up of a non-paged terminal by the paging message in the cell is avoided.

### Embodiment 1: Core network paging (CN Paging)

In Embodiment 1, an interface message may indicate a terminal type of a terminal that a base station forbids to camp.

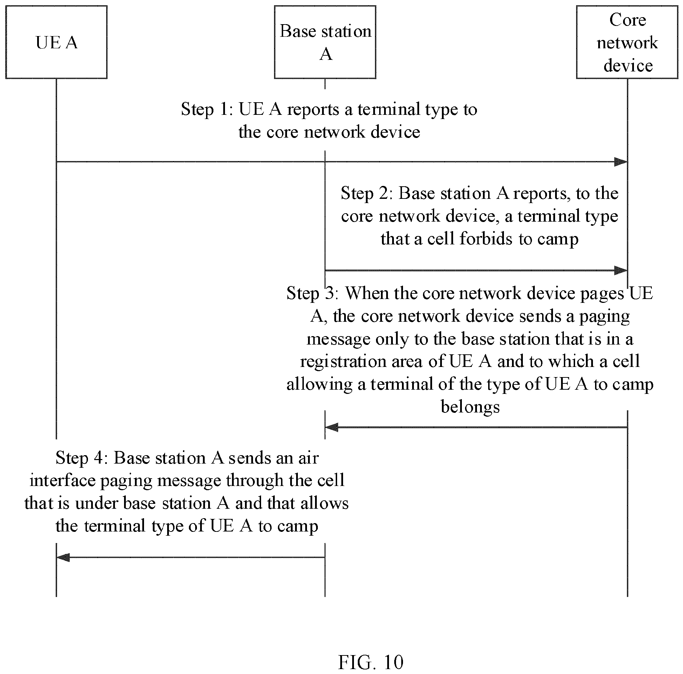

Referring to FIG. 10, specific steps are as follows:
Step 1: UE A reports its terminal type to a core network device, where the terminal type is one of the following:
   (a) a 1rx RedCap terminal;
   (b) a 2rx RedCap terminal; and
   (c) other terminals, where the other terminals are a type of terminal that a cell can forbid to camp by using a broadcast message, other than (a) and (b).
Step 2: Base station A reports, to the core network device, a terminal type of a terminal that a cell under base station A forbids or allows to camp. A possible manner may be one of the following:
   (a) The terminal type reported by the base station is applicable to all cells under the base station, that is, all the cells under the base station forbid or allow the terminal of the reported type to camp.
   (b) The base station reports a terminal type of a terminal that is forbidden to camp on each cell. In other words, each cell under the base station may forbid different types of terminals to camp, and the base station reports the terminal type of the terminal that each cell forbids or allows to camp.

   It may be understood that the terminal type of the terminal that the cell forbids or allows to camp in step 2 is in a correspondence with the terminal type in step 1; or a fixed mapping relationship and/or a mapping relationship known to the core network device exist/exists between the two types.
Step 3: When the core network device pages UE A, the core network device sends a paging message (such as an N2 paging message) only to a base station that is in a registration area of UE A and to which the cell allowing a terminal of the type of UE A to camp belongs.
Step 4: Base station A sends an air interface paging message through the cell that is under base station A and that allows the terminal type of UE A to camp.

It may be understood that the core network device can indicate, to base station A, a cell that needs to send paging or a cell that does not need to send paging. For example, if only some cells of base station A support the terminal belonging to the type of UE A in camping, the core network device can indicate, to base station A, the cells that need to send paging or the cells that do not need to send paging.

### Embodiment 1a: Radio access network paging (RAN Paging)

Base station B is any base station neighboring to base station A, and base station A is an anchor base station of UE A.

In the related art, an anchor base station knows a type of inactive UE.

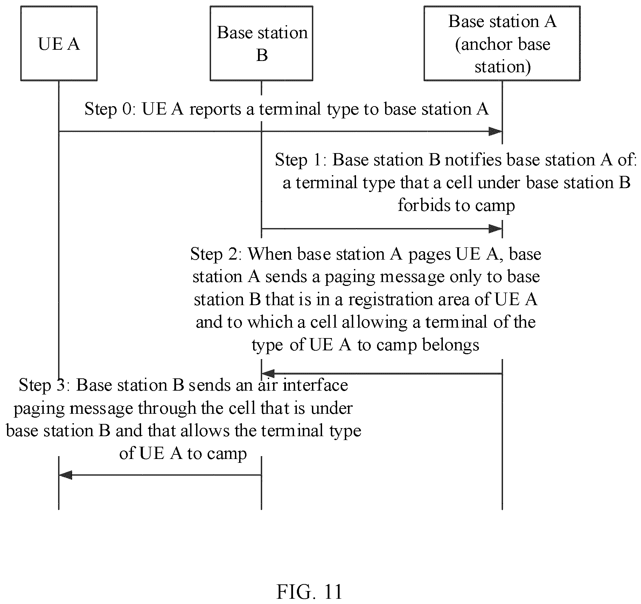

Referring to FIG. 11, specific steps are as follows:
Step 0: UE A reports a terminal type to base station A, where the terminal type includes one of the following:
   (a) a 1rx RedCap terminal;
   (b) a 2rx RedCap terminal; and
   (c) other terminals, where the other terminals are a type of terminal that a cell can forbid to camp by using a broadcast message, other than (a) and (b).
Step 1: Base station B notifies base station A of: a terminal type of a terminal that a cell under base station B forbids to camp. A possible manner may be one of the following:
   (a) An indication from base station B to base station A is applicable to all cells under base station B, that is, all the cells under base station B forbid the terminal of the reported type to camp.
   (b) Base station B indicates, to base station A, a terminal type of a terminal that is forbidden to camp on each cell. In other words, each cell under base station B may forbid different types of terminals to camp, and base station B indicates the terminal type of the terminal that each cell forbids to camp.
Step 2: When an anchor base station (base station A) pages UE A, the anchor base station sends a paging message (such as an Xn paging message) only to a base station (for example, base station B) that is in a registration area of UE A and to which the cell allowing a terminal of the type of UE A to camp belongs.
Step 3: Base station B sends an air interface paging message through a cell that is under base station B and that allows the terminal type of UE A to camp.

It may be understood that base station A can indicate, to base station B, a cell that needs to send paging or a cell that does not need to send paging. For example, if only some cells of base station A support the terminal belonging to the type of UE A in camping, base station A can indicate, to base station B, the cells that need to send paging or the cells that do not need to send paging.

### Embodiment 2: CN paging (a type of a paged terminal is indicated in an NG paging message)

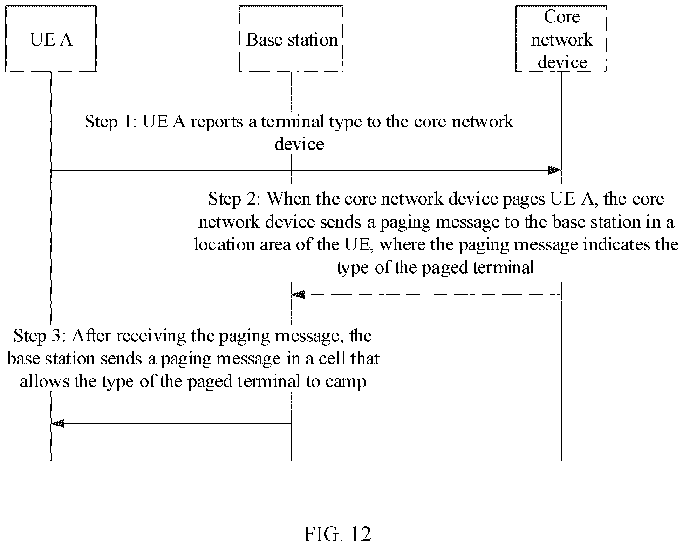

Referring to FIG. 12, specific steps are as follows:
Step 1: UE A reports its terminal type to a core network device, where the terminal type includes one of the following:
   (a) a 1rx RedCap terminal;
   (b) a 2rx RedCap terminal; and
   (c) other terminals, where the other terminals are a type of terminal that a cell can forbid to camp by using a broadcast message, other than (a) and (b).
Step 2: When the core network device pages UE A, the core network device sends a paging message (such as an N2 paging message) to a base station in a location area of the UE, where the paging message indicates the type of the paged terminal.
Step 3: After receiving the paging message, the base station sends a paging message (for example, an air interface paging message) in a cell that allows the paged terminal to camp.

### Embodiment 2a: RAN paging (a type of a paged terminal is indicated in an Xn paging message)

Base station B is any base station neighboring to base station A, and base station A is an anchor base station of UE A.

In the prior art, an anchor base station knows a type of inactive UE.

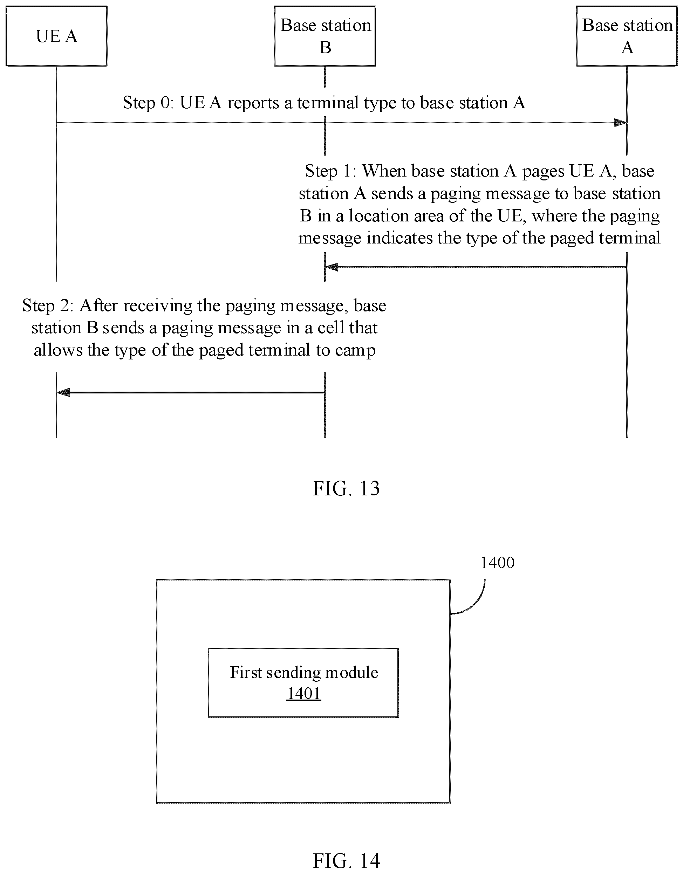

Referring to FIG. 13, specific steps are as follows:
Step 0: UE A reports its terminal type to base station A, where the terminal type includes one of the following:
   (a) a 1rx RedCap terminal;
   (b) a 2rx RedCap terminal; and
   (c) other terminals, where the other terminals are a type of terminal that a cell can forbid to camp by using a broadcast message, other than (a) and (b).
Step 1: When an anchor base station (base station A) pages UE A, the anchor base station sends a paging message (such as an N2 paging message) to base station B in a location area of the UE, where the paging message indicates the type of the paged terminal.
Step 2: After receiving the paging message, base station B sends a paging message (for example, an air interface paging message) in a cell that allows the paged terminal to camp.

It may be understood that the foregoing embodiment may also be used in LTE. For example, an N2 interface may be replaced with an S1 interface, and an Xn interface may be replaced with an X2 interface.

### Embodiment 3a

Step 1: gNB 1 sends second information to a CN, where the second information indicates that gNB 1 supports RedCap UE.

Step 2: The CN triggers a paging message for UE A, and the CN sends a paging message on an interface between the core network device and the base station to gNB 1, where the paging message includes an identity of a paged terminal and a type/capability of the paged terminal (such as 1rx RedCap).

Optionally, in a case that the paged terminal UE A is 1rx RedCap UE, the CN can send the paging message on the interface between the core network device and the base station only to the gNB that supports RedCap.

Step 3: gNB 1 sends a paging message including a paging ID of UE A on an air interface of a cell that is under gNB 1 and that allows 1rx RedCap to camp.

### Embodiment 3b

Step 1: gNB 1 sends second information to gNB 2, where the second information indicates that gNB 1 supports RedCap UE, and gNB 2 is an anchor base station of gNB 1.

Step 2: gNB 2 triggers a paging message for UE A, and gNB 2 sends a paging message on an interface between base stations to gNB 1, where the paging message includes an identity of a paged terminal and a type of the paged terminal (such as 1rx RedCap).

Optionally, in a case that the paged terminal UE A is 1rx RedCap UE, gNB 2 can send the paging message on the interface between base stations only to the gNB that supports RedCap.

Step 3: gNB 1 sends a paging message including an ID of the terminal on an air interface of a cell that is under gNB 1 and that allows 1rx RedCap to camp.

Referring to FIG. 14, an embodiment of this application provides a paging apparatus applied to a terminal. The apparatus 1400 includes:
a first sending module 1401, configured to send one or more of the following to a core network device and/or a serving cell:
(1) first information, where the first information indicates a radio access capability of the terminal; and
(2) second information, where the second information indicates a terminal type of the terminal.

The first information and/or the second information are/is used by the core network device and/or the serving cell and/or a base station to determine whether to send a paging message for a paged terminal through a cell on which the paged terminal camps.

In an implementation of this application, the apparatus further includes:
a first receiving module, configured to receive a paging message through a first cell, where the first cell allows the terminal of the terminal type or having the radio access capability to camp.

In an implementation of this application, the radio access capability or the terminal type includes one or more of the following:
(1) a RedCap terminal;
(2) a RedCap terminal having one receive antenna;
(3) a RedCap terminal having two receive antennas; and
(4) other terminals, where the other terminals are terminals that a radio access network device can forbid to camp by using a broadcast message, other than the RedCap terminal having one or two receive antennas.

The apparatus provided in this embodiment of this application can implement each process implemented by the method embodiment in FIG. 4, with the same technical effect achieved. To avoid repetition, details are not described herein again.

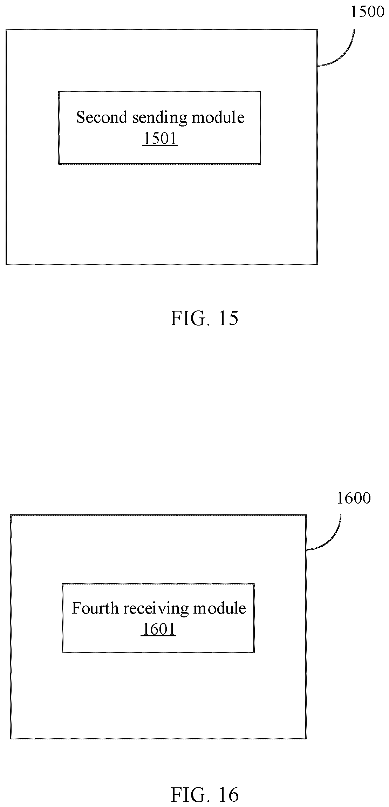

Referring to FIG. 15, an embodiment of this application provides a paging apparatus applied to a first radio access network device. The apparatus includes:
a second sending module 1501, configured to send third information to a core network device and/or a second radio access network device, where the third information indicates a terminal type of a terminal that the first radio access network device forbids or allows to camp.

The third information is used by the core network device and/or the second radio access network device to determine whether to send a paging message for a paged terminal through the first radio access network device.

In an implementation of this application, the apparatus further includes:
a second receiving module, configured to receive a first paging message from the core network device and/or the second radio access network device, where the first paging message includes one or more of the following:
(1) an identity of the paged terminal;
(2) information about a second cell, where the second cell is a cell that needs to send a paging message including the identity of the paged terminal, for example, an identity of the second cell; and
(3) information about a third cell, where the third cell is a cell that does not need to send a paging message including the identity of the paged terminal, for example, an identity of the third cell.

In an implementation of this application, the apparatus further includes:
a third sending module, configured to send a second paging message to the paged terminal through the second cell, or send a second paging message to the paged terminal through a cell under the apparatus other than the third cell.

In an implementation of this application, the apparatus further includes:
a third receiving module, configured to receive a third paging message from the core network device and/or the second radio access network device, where the third paging message includes one or more of the following: fourth information and the identity of the paged terminal, and the fourth information indicates a terminal type of the paged terminal.

In an implementation of this application, the apparatus further includes:
a fourth sending module, configured to send a paging message through a cell that is under the apparatus and that allows the terminal type of the paged terminal indicated by the fourth information to camp.

In an implementation of this application, the terminal type of the terminal that the first radio access network device forbids or allows to camp includes: a terminal type of a terminal that all cells of the first radio access network device forbid or allow to camp; or a terminal type of a terminal that each cell of the first radio access network device forbids or allows to camp.

The apparatus provided in this embodiment of this application can implement each process implemented by the method embodiment in FIG. 5, with the same technical effect achieved. To avoid repetition, details are not described herein again.

Referring to FIG. 16, an embodiment of this application provides a paging apparatus applied to a second radio access network device. The apparatus 1600 includes:
a fourth receiving module 1601, configured to receive one or more of the following from a terminal: first information, where the first information indicates a radio access capability of the terminal, and second information, where the second information indicates a terminal type of the terminal; or receive third information from a first radio access network device, where the third information indicates a terminal type of a terminal that the first radio access network device forbids or allows to camp.

In an implementation of this application, the apparatus further includes:
a fourth sending module, configured to send a fourth paging message to the first radio access network device, where at least one cell of the first radio access network device allows a terminal belonging to a terminal type of a paged terminal to camp; or send a fifth paging message, where the fifth paging message includes one or more of the following: fifth information and an identity of a paging terminal, and the fifth information indicates a terminal type of a paged terminal.

In an implementation of this application, the fourth paging message includes one or more of the following:
(1) an identity of the paged terminal;
(2) information about a second cell, where the second cell is a cell that needs to send a paging message including the identity of the paged terminal; and
(3) information about a third cell, where the third cell is a cell that does not need to send a paging message including the identity of the paged terminal.

In an implementation of this application, the terminal type of the terminal that the first radio access network device forbids or allows to camp includes: a terminal type of a terminal that all cells of the first radio access network device forbid or allow to camp; or a terminal type of a terminal that each cell of the first radio access network device forbids or allows to camp.

In an implementation of this application, the radio access capability or the terminal type includes one or more of the following:
(1) a RedCap terminal having one receive antenna;
(2) a RedCap terminal having two receive antennas; and
(3) other terminals, where the other terminals are terminals that a radio access network device can forbid to camp by using a broadcast message, other than the RedCap terminal having one or two receive antennas.

The apparatus provided in this embodiment of this application can implement each process implemented by the method embodiment in FIG. 6, with the same technical effect achieved. To avoid repetition, details are not described herein again.

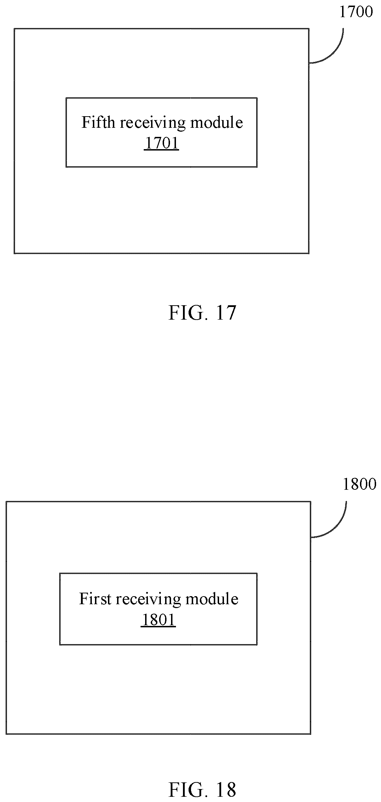

Referring to FIG. 17, an embodiment of this application provides a paging apparatus applied to a core network device. The apparatus 1700 includes:
a fifth receiving module 1701, configured to receive one or more of the following: first information, where the first information indicates a radio access capability of a terminal; and second information, where the second information indicates a terminal type of the terminal; and/or receive third information from a first radio access network device, where the third information indicates a terminal type of a terminal that the first radio access network device forbids or allows to camp.

The first information and/or the second information are/is used by the core network device and/or a serving cell and/or a base station to determine whether to send a paging message for a paged terminal through a cell on which the paged terminal camps.

The third information is used by the core network device and/or a second radio access network device to determine whether to send a paging message for the paged terminal through the first radio access network device.

In an implementation of this application, the apparatus further includes:
a determining module, configured to determine a terminal type of the paged terminal based on the first information and/or the second information; and determine a third radio access network device, where the third radio access network device has at least one cell that allows the paged terminal to camp; or
a sixth sending module, configured to send a sixth paging message to a third radio access network device, or send a seventh paging message to the first radio access network device, where the seventh paging message includes one or more of the following: sixth information and an identity of the paged terminal, and the sixth information indicates a terminal type of the paged terminal.

In an implementation of this application, the sixth paging message includes one or more of the following:
(1) the identity of the paged terminal;
(2) information about a second cell, where the second cell is a cell that needs to send a paging message including the identity of the paged terminal; and
(3) information about a third cell, where the third cell is a cell that does not need to send a paging message including the identity of the paged terminal.

In an implementation of this application, the terminal type includes one or more of the following:
(1) a RedCap terminal having one receive antenna;
(2) a RedCap terminal having two receive antennas; and
(3) other terminals, where the other terminals are terminals that a radio access network device can forbid to camp by using a broadcast message, other than the RedCap terminal having one or two receive antennas.

The apparatus provided in this embodiment of this application can implement each process implemented by the method embodiment in FIG. 7, with the same technical effect achieved. To avoid repetition, details are not described herein again.

Referring to FIG. 18, an embodiment of this application provides a paging apparatus 1800 applied to a first radio access network device. The apparatus includes:
a first receiving module 1801, configured to receive a first paging message from a core network device and/or a second radio access network device, where
the first paging message includes first information and an identity of a paged terminal, where the first information indicates a terminal type of the paged terminal or a radio access capability of the paged terminal; or
the first paging message includes an identity of a paged terminal and information about a second cell, or an identity of a paged terminal and information about a third cell, where the second cell is a cell that needs to send a paging message including the identity of the paged terminal, and the third cell is a cell that does not need to send a paging message including the identity of the paged terminal.

Optionally, in a case that the first paging message includes the first information and the identity of the paged terminal, the apparatus 1800 further includes:
a first sending module, where the first sending module is configured to send a paging message through a cell that is under the first radio access network device and that allows the terminal type of the paged terminal to camp.

Optionally, the apparatus 1800 further includes:
a second sending module, where the second sending module is configured to send a second paging message to the paged terminal through the second cell; or
the second sending module is configured to send a second paging message to the paged terminal through a cell under the apparatus other than the third cell.

Optionally, the apparatus 1800 further includes:
a third sending module, where the third sending module is configured to send second information to the core network device and/or the second radio access network device, where the second information is used to indicate at least one of the following:
a terminal type of a terminal that the first radio access network device forbids or allows to camp;
a terminal type supported by the first radio access network device; and
the first radio access network device being a network device supporting a first terminal type.

Optionally, the terminal type of the terminal that the first radio access network device forbids or allows to camp includes:
a terminal type of a terminal that all cells of the first radio access network device forbid or allow to camp;
   or
a terminal type of a terminal that each cell of the first radio access network device forbids or allows to camp.

Optionally, the radio access capability, the terminal type, or the first terminal type includes at least one of the following:
a reduced capability RedCap terminal;
a RedCap terminal having one receive antenna;
a RedCap terminal having two receive antennas; and
other terminals, where the other terminals are terminals that a radio access network device can forbid to camp by using a broadcast message, other than the RedCap terminal having one or two receive antennas.

Optionally, the apparatus 1800 further includes:
a second receiving module, where the second receiving module is configured to receive one or more of the following from a terminal:
third information, where the third information indicates a radio access capability of the terminal; and
fourth information, where the fourth information indicates a terminal type of the terminal; and
a third receiving module, where the third receiving module is configured to send one or more of the following to the core network device and/or the second radio access network device:
   the third information, where the third information indicates the radio access capability of the terminal; and
   the fourth information, where the fourth information indicates the terminal type of the terminal.

The apparatus provided in this embodiment of this application can implement each process implemented by the method embodiment in FIG. 8, with the same technical effect achieved. To avoid repetition, details are not described herein again.

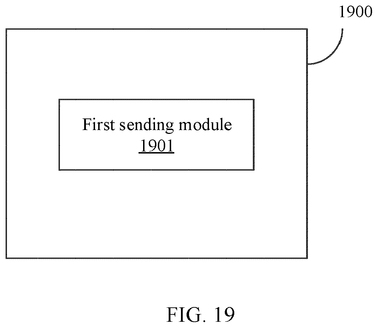

Referring to FIG. 19, an embodiment of this application provides a paging apparatus 1900 applied to a network-side device. The apparatus 1900 includes:
a first sending module 1901, where the first sending module is configured to send a first paging message to a first radio access network device, where the first paging message includes an identity of a paged terminal, and the first radio access network device satisfies at least one of the following: at least one cell of the first radio access network device allows a terminal belonging to a terminal type of the paged terminal to camp, the first radio access network device supports a RedCap terminal, and the first radio access network device supports the terminal belonging to the terminal type of the paged terminal;
   or
a first sending module 1901, configured to send a first paging message to a first radio access network device, where the first paging message includes first information and an identity of a paged terminal, and the first information indicates a terminal type of the paged terminal or a radio access capability of the paged terminal.

Optionally, in a case that the first paging message includes the identity of the paged terminal, the first paging message further includes at least one of the following:
information about a second cell, where the second cell is a cell that needs to send a paging message including the identity of the paged terminal; and
information about a third cell, where the third cell is a cell that does not need to send a paging message including the identity of the paged terminal.

Optionally, the apparatus 1900 further includes:
a first receiving module, where the first receiving module is configured to receive second information from the first radio access network device;
   or
a first obtaining module, where the first obtaining module is configured to obtain second information through an OAM configuration, where
the second information is used to indicate at least one of the following:
   a terminal type of a terminal that the first radio access network device forbids or allows to camp;
   a terminal type supported by the first radio access network device; and
   the first radio access network device being a network device supporting a first terminal type.

Optionally, the terminal type of the terminal that the first radio access network device forbids or allows to camp includes:
a terminal type of a terminal that all cells of the first radio access network device forbid or allow to camp;
   or
a terminal type of a terminal that each cell of the first radio access network device forbids or allows to camp.

Optionally, the apparatus 1900 further includes:
a second obtaining module, where the second obtaining module is configured to obtain one or more of third information and fourth information from a terminal, where the third information indicates a radio access capability of the terminal, and the fourth information indicates a terminal type of the terminal;
   or
a second receiving module, where the second receiving module is configured to receive one or more of the following from a third access network device: third information, where the third information indicates a radio access capability of a terminal; and fourth information, where the fourth information indicates a terminal type of the terminal.

Optionally, the radio access capability, the terminal type, or the first terminal type includes one or more of the following:
a RedCap terminal having one receive antenna;
a RedCap terminal having two receive antennas; and
other terminals, where the other terminals are terminals that a radio access network device can forbid to camp by using a broadcast message, other than the RedCap terminal having one or two receive antennas.

Optionally, the network-side device includes a second access network device or a core network device.

Optionally, in a case that the network-side device is the core network device, the apparatus 1900 further includes:
a determining module, where the determining module is configured to determine the terminal type of the paged terminal based on the third information and/or the fourth information.

The apparatus provided in this embodiment of this application can implement each process implemented by the method embodiment in FIG. 9, with the same technical effect achieved. To avoid repetition, details are not described herein again.

An embodiment of this application further provides a terminal, including a processor and a communication interface. The communication interface is configured to send, by a terminal, one or more of the following to a core network device and/or a serving cell: first information, where the first information indicates a radio access capability of the terminal; and second information, where the second information indicates a terminal type of the terminal. The terminal embodiment corresponds to the foregoing terminal-side method embodiment, and each implementation process and implementation of the foregoing method embodiment can be applied to the terminal embodiment, with the same technical effect achieved.

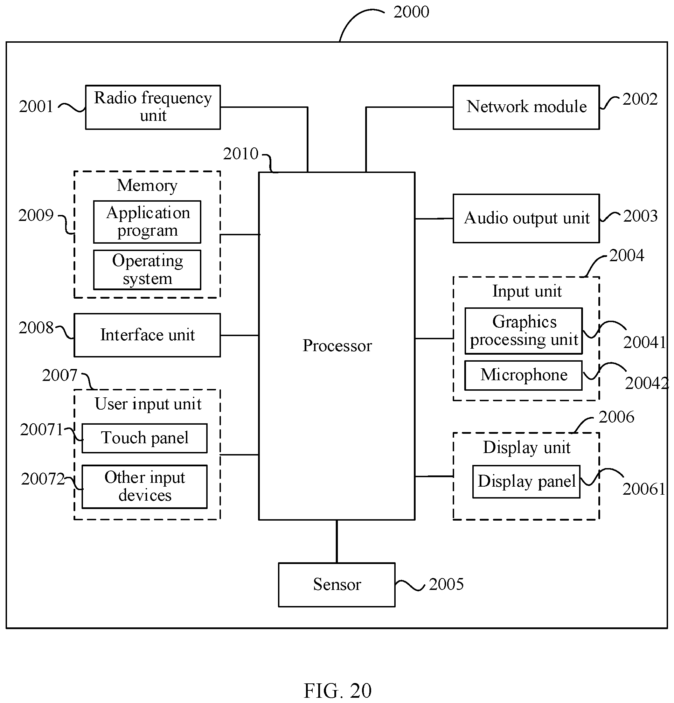

Specifically, FIG. 20 is a schematic diagram of a hardware structure of a terminal for implementing an embodiment of this application. The terminal 2000 includes but is not limited to at least some components such as a radio frequency unit 2001, a network module 2002, an audio output unit 2003, an input unit 2004, a sensor 2005, a display unit 2006, a user input unit 2007, an interface unit 2008, a memory 2009, and a processor 2010.

A person skilled in the art may understand that the terminal 2000 may further include a power supply (for example, a battery) supplying power to all components. The power supply may be logically connected to the processor 2010 through a power management system. In this way, functions such as charge management, discharge management, and power consumption management are implemented by using the power management system. The terminal structure shown in FIG. 20 does not constitute a limitation on the terminal. The terminal may include more or fewer components than those shown in the figure, or some components are combined, or component arrangements are different. Details are not described herein again.

It should be understood that, in this embodiment of this application, the input unit 2004 may include a graphics processing unit (Graphics Processing Unit, GPU) 20041 and a microphone 20042. The graphics processing unit 20041 processes image data of a still picture or video obtained by an image capture apparatus (such as a camera) in a video capture mode or an image capture mode. The display unit 2006 may include a display panel 20061, and the display panel 20061 may be configured in a form of a liquid crystal display, an organic light-emitting diode, or the like. The user input unit 2007 includes a touch panel 20071 and other input devices 20072. The touch panel 20071 is also referred to as a touchscreen. The touch panel 20071 may include two parts: a touch detection apparatus and a touch controller. The other input devices 20072 may include but are not limited to a physical keyboard, a function key (such as a volume control button or a power button), a trackball, a mouse, and a joystick. Details are not described herein again.

In this embodiment of this application, after receiving downlink data from a network-side device, the radio frequency unit 2001 sends the downlink data to the processor 2010 for processing, and in addition, sends uplink data to the network-side device. Generally, the radio frequency unit 2001 includes but is not limited to an antenna, at least one amplifier, a transceiver, a coupler, a low noise amplifier, a duplexer, and the like.

The memory 2009 may be configured to store software programs or instructions and various data. The memory 2009 may primarily include a program or instruction storage area and a data storage area. The program or instruction storage area may store an operating system, an application program or instructions (such as an audio play function and an image play function) required by at least one function, and the like. In addition, the memory 2009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 2010 may include one or more processing units. Optionally, the processor 2010 may integrate an application processor and a modem processor. The application processor mainly processes the operating system, a user interface, an application program or an instruction, and the like. The modem processor mainly processes wireless communication. For example, the modem processor is a baseband processor. It may be understood that the modem processor may alternatively not be integrated in the processor 2010.

The terminal provided in this embodiment of this application can implement each process implemented by the method embodiment in FIG. 4, with the same technical effect achieved. To avoid repetition, details are not described herein again.

An embodiment of this application further provides a network-side device, including a processor and a communication interface. The communication interface is configured to: receive one or more of the following from a terminal: first information, where the first information indicates a radio access capability of the terminal, and second information, where the second information indicates a terminal type of the terminal; or send third information to a core network device and/or a second radio access network device, where the third information indicates a terminal type of a terminal that a first radio access network device forbids or allows to camp; or receive third information from a first radio access network device, where the third information indicates a terminal type of a terminal that the first radio access network device forbids or allows to camp; or receive one or more of the following: first information, where the first information indicates a radio access capability of a terminal; and second information, where the second information indicates a terminal type of the terminal; and/or receive third information from a first radio access network device, where the third information indicates a terminal type of a terminal that the first radio access network device forbids or allows to camp. The network-side device embodiment corresponds to the foregoing method embodiment of the network-side device, and each implementation process and implementation of the foregoing method embodiment can be applied to the network-side device embodiment, with the same technical effect achieved.

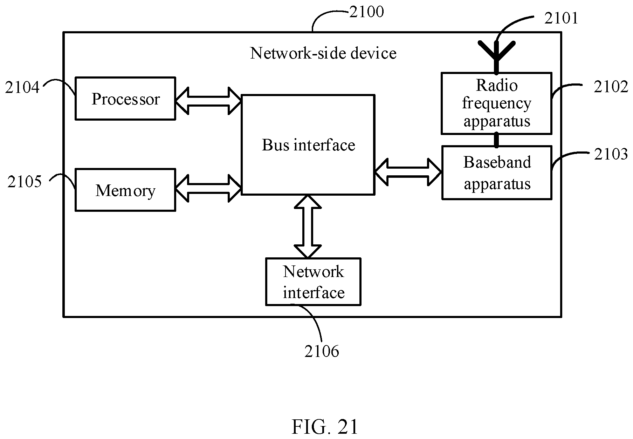

Specifically, an embodiment of this application further provides a network-side device. As shown in FIG. 21, the network-side device 2100 includes an antenna 2101, a radio frequency apparatus 2102, and a baseband apparatus 2103. The antenna 2101 is connected to the radio frequency apparatus 2102. In an uplink direction, the radio frequency apparatus 2102 receives information by using the antenna 2101, and sends the received information to the baseband apparatus 2103 for processing. In a downlink direction, the baseband apparatus 2103 processes to-be-sent information, and sends the information to the radio frequency apparatus 2102; and the radio frequency apparatus 2102 processes the received information and then sends the information out by using the antenna 2101.

The frequency band processing apparatus may be located in the baseband apparatus 2103. The method performed by the network-side device in the foregoing embodiment may be implemented in the baseband apparatus 2103, and the baseband apparatus 2103 includes a processor 2104 and a memory 2105.

The baseband apparatus 2103 may include, for example, at least one baseband processing unit, where a plurality of chips are disposed on the baseband processing unit. As shown in FIG. 21, one of the chips is, for example, the processor 2104, connected to the memory 2105, to invoke a program in the memory 2105 to perform the operation of the network device shown in the foregoing method embodiment.

The baseband apparatus 2103 may further include a network interface 2106, configured to exchange information with the radio frequency apparatus 2102, where the interface is, for example, a common public radio interface (Common Public Radio Interface, CPRI).

Specifically, the network-side device in this embodiment of this application further includes a program or instructions stored in the memory 2105 and capable of running on the processor 2104. It may be understood that the processor 2104 invokes the program or instructions in the memory 2105 to perform the method performed by each module shown in FIG. 15 to FIG. 19, with the same technical effect achieved. To avoid repetition, details are not described herein again.

An embodiment of this application further provides a computer program or program product. The computer program or program product is stored in a non-volatile storage medium. The computer program or program product is executed by at least one processor to implement the steps of the foregoing processing method in FIG. 4, FIG. 5, FIG. 6, FIG. 7, FIG. 8, or FIG. 9.

An embodiment of this application further provides a readable storage medium. The readable storage medium may be volatile or non-volatile. The readable storage medium stores a program or instructions. When the program or instructions are executed by a processor, each process of the foregoing method embodiment in FIG. 4, FIG. 5, FIG. 6, FIG. 7, FIG. 8, or FIG. 9 is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application further provides a chip. The chip includes a processor and a communication interface. The communication interface is coupled to the processor. The processor is configured to run a program or instructions to implement each process of the foregoing method embodiment in FIG. 4, FIG. 5, FIG. 6, FIG. 7, FIG. 8, or FIG. 9, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A paging method, comprising:
receiving, by a first radio access network device, a first paging message from a core network device and/or a second radio access network device, wherein
the first paging message comprises first information and an identity of a paged terminal, wherein the first information indicates a terminal type of the paged terminal or a radio access capability of the paged terminal; or
the first paging message comprises an identity of a paged terminal and information about a second cell, or an identity of a paged terminal and information about a third cell, wherein the second cell is a cell that needs to send a paging message comprising the identity of the paged terminal, and the third cell is a cell that does not need to send a paging message comprising the identity of the paged terminal.

2. The method according to claim 1, wherein in a case that the first paging message comprises the first information and the identity of the paged terminal, the method further comprises:
sending, by the first radio access network device, a paging message through a cell that is under the first radio access network device and that allows the terminal type of the paged terminal to camp.

3. The method according to claim 1, wherein the method further comprises:
sending, by the first radio access network device, a second paging message to the paged terminal through the second cell; or
sending, by the first radio access network device, a second paging message to the paged terminal through a cell under the first radio access network device other than the third cell.

4. The method according to any one of claims 1 to 3, wherein the method further comprises:
sending, by the first radio access network device, second information to the core network device and/or the second radio access network device, wherein the second information is used to indicate at least one of the following:
a terminal type of a terminal that the first radio access network device forbids or allows to camp;
a terminal type supported by the first radio access network device; and
the first radio access network device being a network device supporting a first terminal type.

5. The method according to claim 4, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

6. The method according to any one of claims 1 to 5, wherein the radio access capability, the terminal type, or the first terminal type comprises at least one of the following:
a reduced capability RedCap terminal;
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

7. The method according to claim 4, wherein the terminal type of the paged terminal is the same as or different from the terminal type of the terminal that the first radio access network device forbids or allows to camp, the terminal type supported by the first radio access network device, or the first terminal type.

8. The method according to any one of claims 1 to 7, wherein the method further comprises:
receiving, by the first radio access network device, one or more of the following from a terminal:
third information, wherein the third information indicates a radio access capability of the terminal; and
fourth information, wherein the fourth information indicates a terminal type of the terminal; and
sending, by the first radio access device, one or more of the following to the core network device and/or the second radio access network device:
the third information, wherein the third information indicates the radio access capability of the terminal; and
the fourth information, wherein the fourth information indicates the terminal type of the terminal.

9. A paging method, comprising:
sending, by a network-side device, a first paging message to a first radio access network device, wherein the first paging message comprises an identity of a paged terminal, and the first radio access network device satisfies at least one of the following: at least one cell of the first radio access network device allows a terminal belonging to a terminal type of the paged terminal to camp, the first radio access network device supports a RedCap terminal, and the first radio access network device supports the terminal belonging to the terminal type of the paged terminal;
or
sending, by a network-side device, a first paging message to a first radio access network device, wherein the first paging message comprises first information and an identity of a paged terminal, and the first information indicates a terminal type of the paged terminal or a radio access capability of the paged terminal.

10. The method according to claim 9, wherein in a case that the first paging message comprises the identity of the paged terminal, the first paging message further comprises at least one of the following:
information about a second cell, wherein the second cell is a cell that needs to send a paging message comprising the identity of the paged terminal; and
information about a third cell, wherein the third cell is a cell that does not need to send a paging message comprising the identity of the paged terminal.

11. The method according to claim 9 or 10, wherein the method further comprises:
receiving, by the network-side device, second information from the first radio access network device; or
obtaining, by the network-side device, second information through an operation, administration and maintenance OAM configuration, wherein
the second information is used to indicate at least one of the following:
a terminal type of a terminal that the first radio access network device forbids or allows to camp;
a terminal type supported by the first radio access network device; and
the first radio access network device being a network device supporting a first terminal type.

12. The method according to claim 11, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

13. The method according to any one of claims 9 to 12, wherein the method further comprises:
obtaining, by the network-side device, one or more of third information and fourth information from a terminal, wherein the third information indicates a radio access capability of the terminal, and the fourth information indicates a terminal type of the terminal;
or
receiving, by the network-side device, one or more of the following from a third access network device:
third information, wherein the third information indicates a radio access capability of a terminal; and
fourth information, wherein the fourth information indicates a terminal type of the terminal.

14. The method according to claim 13, wherein the radio access capability, the terminal type, or the first terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

15. The method according to any one of claims 9 to 14, wherein the network-side device comprises a second access network device or a core network device.

16. The method according to claim 15, wherein in a case that the network-side device is the core network device, the method further comprises:
determining, by the core network device, the terminal type of the paged terminal based on the third information and/or the fourth information.

17. A paging method, comprising:
sending, by a terminal, one or more of the following to a core network device and/or a serving cell:
first information, wherein the first information indicates a radio access capability of the terminal; and
second information, wherein the second information indicates a terminal type of the terminal.

18. The method according to claim 17, wherein the method further comprises:
receiving, by the terminal, a paging message through a first cell, wherein the first cell allows the terminal of the terminal type or having the radio access capability to camp.

19. The method according to claim 17 or 18, wherein the radio access capability or the terminal type comprises one or more of the following: a reduced capability RedCap terminal;
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

20. The method according to claim 17, wherein sending, by the terminal, one or more of the first information and the second information to the core network device comprises:
sending, by the terminal, one or more of the first information and the second information to a serving base station of the terminal, so that the serving base station of the terminal sends one or more of the first information and the second information to the core network device.

21. A paging method, comprising:
sending, by a first radio access network device, third information to a core network device and/or a second radio access network device, wherein the third information is used to indicate at least one of the following:
a terminal type of a terminal that the first radio access network device forbids or allows to camp;
a terminal type supported by the first radio access network device; and
the first radio access network device being a network device supporting a first terminal type.

22. The method according to claim 21, wherein the method further comprises:
receiving, by the first radio access network device, a first paging message from the core network device and/or the second radio access network device, wherein the first paging message comprises one or more of the following:
an identity of a paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

23. The method according to claim 22, wherein the method further comprises:
sending, by the first radio access network device, a second paging message to the paged terminal through the second cell; or
sending, by the first radio access network device, a second paging message to the paged terminal through a cell under the first radio access network device other than the third cell.

24. The method according to claim 22, wherein the method further comprises:
receiving, by the first radio access network device, a third paging message from the core network device and/or the second radio access network device, wherein the third paging message comprises fourth information and the identity of the paged terminal, and the fourth information indicates a terminal type of the paged terminal.

25. The method according to claim 24, wherein the method further comprises:
sending, by the first radio access network device, a paging message through a cell that is under the first radio access network device and that allows the terminal type of the paged terminal to camp.

26. The method according to claim 22, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

27. A paging method, comprising:
receiving, by a second radio access network device, one or more of the following from a terminal: first information, wherein the first information indicates a radio access capability of the terminal, and second information, wherein the second information indicates a terminal type of the terminal;
or
receiving, by a second radio access network device, third information from a first radio access network device, wherein the third information indicates a terminal type of a terminal that the first radio access network device forbids or allows to camp.

28. The method according to claim 27, wherein the method further comprises:
sending, by the second radio access network device, a fourth paging message to the first radio access network device, wherein at least one cell of the first radio access network device allows a terminal belonging to a terminal type of a paged terminal to camp; or
sending, by the second radio access network device, a fifth paging message to the first radio access network device, wherein the fifth paging message comprises one or more of the following: fifth information and an identity of a paging terminal, and the fifth information indicates a terminal type of the paged terminal.

29. The method according to claim 28, wherein the fourth paging message comprises one or more of the following:
an identity of the paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

30. The method according to claim 27, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

31. The method according to claim 27, wherein the radio access capability or the terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

32. A paging method, comprising:
receiving, by a core network device, one or more of the following: first information, wherein the first information indicates a radio access capability of a terminal; and second information, wherein the second information indicates a terminal type of the terminal;
and/or
receiving, by the core network device, third information from a first radio access network device, wherein the third information indicates a terminal type of a terminal that the first radio access network device forbids or allows to camp.

33. The method according to claim 32, wherein the method further comprises:
determining, by the core network device, a terminal type of a paged terminal based on the first information and/or the second information; and
determining, by the core network device, a third radio access network device, wherein the third radio access network device has at least one cell that allows the paged terminal to camp; and sending, by the core network device, a sixth paging message to the third radio access network device;
or
sending, by the core network device, a seventh paging message to the first radio access network device, wherein the seventh paging message comprises one or more of the following: sixth information and an identity of a paged terminal, and the sixth information indicates a terminal type of the paged terminal.

34. The method according to claim 33, wherein
the sixth paging message comprises one or more of the following:
the identity of the paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

35. The method according to claim 32, wherein the terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

36. A paging apparatus, applied to a first radio access network device and comprising:
a first receiving module, configured to receive a first paging message from a core network device and/or a second radio access network device, wherein
the first paging message comprises first information and an identity of a paged terminal, wherein the first information indicates a terminal type of the paged terminal or a radio access capability of the paged terminal; or
the first paging message comprises an identity of a paged terminal and information about a second cell, or an identity of a paged terminal and information about a third cell, wherein the second cell is a cell that needs to send a paging message comprising the identity of the paged terminal, and the third cell is a cell that does not need to send a paging message comprising the identity of the paged terminal.

37. The apparatus according to claim 36, wherein in a case that the first paging message comprises the first information and the identity of the paged terminal, the apparatus further comprises:
a first sending module, wherein the first sending module is configured to send a paging message through a cell that is under the first radio access network device and that allows the terminal type of the paged terminal to camp.

38. The apparatus according to claim 36, wherein the apparatus further comprises:
a second sending module, wherein the second sending module is configured to send a second paging message to the paged terminal through the second cell; or
the second sending module is configured to send a second paging message to the paged terminal through a cell under the apparatus other than the third cell.

39. The apparatus according to any one of claims 36 to 38, wherein the apparatus further comprises:
a third sending module, wherein the third sending module is configured to send second information to the core network device and/or the second radio access network device, wherein the second information is used to indicate at least one of the following:
a terminal type of a terminal that the first radio access network device forbids or allows to camp;
a terminal type supported by the first radio access network device; and
the first radio access network device being a network device supporting a first terminal type.

40. The apparatus according to claim 39, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

41. The apparatus according to any one of claims 36 to 40, wherein the radio access capability, the terminal type, or the first terminal type comprises at least one of the following:
a reduced capability RedCap terminal;
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

42. The apparatus according to any one of claims 36 to 41, wherein the apparatus further comprises:
a second receiving module, wherein the second receiving module is configured to receive one or more of the following from a terminal:
third information, wherein the third information indicates a radio access capability of the terminal; and
fourth information, wherein the fourth information indicates a terminal type of the terminal; and
a third receiving module, wherein the third receiving module is configured to send one or more of the following to the core network device and/or the second radio access network device:
the third information, wherein the third information indicates the radio access capability of the terminal; and
the fourth information, wherein the fourth information indicates the terminal type of the terminal.

43. A paging apparatus, applied to a network-side device, wherein the apparatus comprises:
a first sending module, wherein the first sending module is configured to send a first paging message to a first radio access network device, wherein the first paging message comprises an identity of a paged terminal, and the first radio access network device satisfies at least one of the following: at least one cell of the first radio access network device allows a terminal belonging to a terminal type of the paged terminal to camp, the first radio access network device supports a RedCap terminal, and the first radio access network device supports the terminal belonging to the terminal type of the paged terminal;
or
a first sending module, configured to send a first paging message to a first radio access network device, wherein the first paging message comprises first information and an identity of a paged terminal, and the first information indicates a terminal type of the paged terminal or a radio access capability of the paged terminal.

44. The apparatus according to claim 43, wherein in a case that the first paging message comprises the identity of the paged terminal, the first paging message further comprises at least one of the following:
information about a second cell, wherein the second cell is a cell that needs to send a paging message comprising the identity of the paged terminal; and
information about a third cell, wherein the third cell is a cell that does not need to send a paging message comprising the identity of the paged terminal.

45. The apparatus according to claim 43 or 44, wherein the apparatus further comprises:
a first receiving module, wherein the first receiving module is configured to receive second information from the first radio access network device;
or
a first obtaining module, wherein the first obtaining module is configured to obtain second information through an OAM configuration, wherein
the second information is used to indicate at least one of the following:
a terminal type of a terminal that the first radio access network device forbids or allows to camp;
a terminal type supported by the first radio access network device; and
the first radio access network device being a network device supporting a first terminal type.

46. The apparatus according to claim 45, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

47. The apparatus according to any one of claims 43 to 46, wherein the apparatus further comprises:
a second obtaining module, wherein the second obtaining module is configured to obtain one or more of third information and fourth information from a terminal, wherein the third information indicates a radio access capability of the terminal, and the fourth information indicates a terminal type of the terminal;
or
a second receiving module, wherein the second receiving module is configured to receive one or more of the following from a third access network device:
third information, wherein the third information indicates a radio access capability of a terminal; and
fourth information, wherein the fourth information indicates a terminal type of the terminal.

48. The apparatus according to claim 47, wherein the radio access capability, the terminal type, or the first terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

49. The apparatus according to any one of claims 43 to 48, wherein the network-side device comprises a second access network device or a core network device.

50. The apparatus according to claim 49, wherein in a case that the network-side device is the core network device, the apparatus further comprises:
a determining module, wherein the determining module is configured to determine the terminal type of the paged terminal based on the third information and/or the fourth information.

51. A paging apparatus, applied to a terminal and comprising:
a first sending module, configured to send one or more of the following to a core network device and/or a serving cell:
first information, wherein the first information indicates a radio access capability of the terminal; and
second information, wherein the second information indicates a terminal type of the terminal.

52. The apparatus according to claim 51, wherein the apparatus further comprises:
a first receiving module, configured to receive a paging message through a first cell, wherein the first cell allows the terminal of the terminal type or having the radio access capability to camp.

53. The apparatus according to claim 51 or 52, wherein the radio access capability or the terminal type comprises one or more of the following:
a RedCap terminal;
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

54. A paging apparatus, applied to a first radio access network device and comprising:
a second sending module, configured to send third information to a core network device and/or a second radio access network device, wherein the third information indicates a terminal type of a terminal that the first radio access network device forbids or allows to camp.

55. The apparatus according to claim 54, wherein the apparatus further comprises:
a second receiving module, configured to receive a first paging message from the core network device and/or the second radio access network device, wherein the first paging message comprises one or more of the following:
an identity of a paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

56. The apparatus according to claim 55, wherein the apparatus further comprises:
a third sending module, configured to send a second paging message to the paged terminal through the second cell, or send a second paging message to the paged terminal through a cell under the apparatus other than the third cell.

57. The apparatus according to claim 54, wherein the apparatus further comprises:
a third receiving module, configured to receive a third paging message from the core network device and/or the second radio access network device, wherein the third paging message comprises one or more of the following: fourth information and the identity of the paged terminal, and the fourth information indicates a terminal type of the paged terminal.

58. The apparatus according to claim 54, wherein the apparatus further comprises:
a fourth sending module, configured to send a paging message through a cell that is under the apparatus and that allows the terminal type of the paged terminal to camp.

59. The apparatus according to claim 54, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

60. A paging apparatus, applied to a second radio access device and comprising:
a fourth receiving module, configured to receive one or more of the following from a terminal: first information, wherein the first information indicates a radio access capability of the terminal, and second information, wherein the second information indicates a terminal type of the terminal; or receive third information from a first radio access network device, wherein the third information indicates a terminal type of a terminal that the first radio access network device forbids or allows to camp.

61. The apparatus according to claim 60, wherein the apparatus further comprises:
a fifth sending module, configured to send a fourth paging message to the first radio access network device, wherein at least one cell of the first radio access network device allows a terminal belonging to a terminal type of a paged terminal to camp; or send a fifth paging message to the first radio access network device, wherein the fifth paging message comprises one or more of the following: fifth information and an identity of a paging terminal, and the fifth information indicates a terminal type of the paged terminal.

62. The apparatus according to claim 61, wherein the fourth paging message comprises one or more of the following:
an identity of the paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

63. The apparatus according to claim 60, wherein the terminal type of the terminal that the first radio access network device forbids or allows to camp comprises:
a terminal type of a terminal that all cells of the first radio access network device forbid or allow to camp;
or
a terminal type of a terminal that each cell of the first radio access network device forbids or allows to camp.

64. The apparatus according to claim 60, wherein the radio access capability or the terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

65. A paging apparatus, applied to a core network device and comprising:
a fifth receiving module, configured to receive one or more of the following: first information, wherein the first information indicates a radio access capability of a terminal; and second information, wherein the second information indicates a terminal type of the terminal;
and/or
receive third information from a first radio access network device, wherein the third information indicates a terminal type of a terminal that the first radio access network device forbids or allows to camp.

66. The apparatus according to claim 65, wherein the apparatus further comprises:
a determining module, configured to determine a terminal type of a paged terminal based on the first information and/or the second information; determine a third radio access network device, wherein the third radio access network device has at least one cell that allows the paged terminal to camp; and send, by the core network device, a sixth paging message to the third radio access network device;
or
a sixth sending module, configured to send a sixth paging message to a third radio access network device, or send a seventh paging message to the first radio access network device, wherein the seventh paging message comprises one or more of the following: sixth information and an identity of a paged terminal, and the sixth information indicates a terminal type of the paged terminal.

67. The apparatus according to claim 65, wherein the sixth paging message comprises one or more of the following:
the identity of the paged terminal;
information about a second cell, wherein the second cell is a cell that needs to send a paging message comprising the identity of the paged terminal; and
information about a third cell, wherein the third cell is a cell that does not need to send a paging message comprising the identity of the paged terminal.

68. The apparatus according to claim 65, wherein the terminal type comprises one or more of the following:
a RedCap terminal having one receive antenna;
a RedCap terminal having two receive antennas; and
other terminals, wherein the other terminals are terminals that a radio access network device can forbid to camp by using a broadcast message, other than the RedCap terminal having one or two receive antennas.

69. A terminal, comprising a processor, a memory, and a program stored in the memory and capable of running on the processor, wherein when the program is executed by the processor, the steps of the method according to any one of claims 17 to 20 are implemented.

70. A network-side device, comprising a processor, a memory, and a program stored in the memory and capable of running on the processor, wherein when the program is executed by the processor, the steps of the method according to any one of claims 1 to 16 are implemented, or the steps of the method according to any one of claims 21 to 35 are implemented.

71. A readable storage medium, wherein the readable storage medium stores a program or instructions, and when the program or instructions are executed by a processor, the steps of the method according to any one of claims 1 to 35 are implemented.
